# EUROPEAN PATENT SPECIFICATION

(11) **EP 1 839 474 B1**
(45) Date of publication and mention of the grant of the patent: **18.02.2009**
(21) Application number: 07105242.7
(22) Date of filing: 29.03.2007
(51) Int. Cl.: A01B 29/06

(54) **Soil Working Tool with at least One Roller Suited for Working the Soil**
Bodenbearbeitungswerkzeug mit mindestens einer zur Bodenbearbeitung geeigneten Walze
Outil de travail de la terre comportant au moins un rouleau adapté pour travailler la terre

(30) Priority: 29.03.2006 DK 200600451
(43) Date of publication of application: 03.10.2007
(73) Proprietor: Kaastrup, Søren, 7870 Roslev (DK)
(72) Inventor: Kaastrup, Søren, 7870 Roslev (DK)
(74) Representative: Nielsen, Leif

(56) References cited:
- GB-A- 1 194 322
- US-A- 1 653 349
- US-A- 2 966 948
- US-A- 3 339 643

## Description

### Field of the Invention

The present invention concerns a soil working tool with at least two rollers with different diameters in that a first roller has greater diameter than a second roller as seen in the direction of movement of the tool, the rollers being suited for working soil and having a roller frame for connecting the at least two rollers to a tool frame or a coupling arrangement for coupling the tool to a towing machine.

### Background of the Invention

A soil working apparatus of the type indicated in the introduction is known from US 1,488,302. Herein is disclosed an apparatus in the form of a roller with two rollers suspended in a roller frame in the shape of a pivotable yoke. The yoke enables the two rollers to assume mutually varying levels during operation. This enables providing a maximum crushing action of the roller as the full weight can be transferred to any of the two rollers. It is, however, not possible to control surface pressure by different types of soil.

Another similar soil working apparatus is described in US 2,966,948. The rollers of this apparatus are mounted on support holders that keep a fixed mutual level in respect to the ground while working.

When cultivating areas of soil, the farmers want a certain texture of the soil, where the uppermost part of the soil is worked at a depth of about five centimetres, whereas the soil layers under the worked soil layer are to be firm. This has appeared to provide the best seedbed for the crops chosen and the greatest yield afterwards.

The common procedure by cultivating a field is as follows:
a) the soil is ploughed at a depth up to 25 cm,
b) the soil is compacted by a soil compacter or a roller,
c) the soil is harrowed for sowing,
d) a chosen crop is sown, and
e) the soil is compacted around the seeds with a soil compacter or roller.

The disadvantage of this procedure for cultivating a field is that the farmer is to drive over the field at least once for each of the above soil preparation types which is expensive and time-consuming.

As a solution to this, agricultural machine producers make combination machines where two or more of the above soil preparation types are performed in one and the same round over the field. For example, there is produced a harrowing/sowing/rolling machine where the above soil preparation type c-e is made in one round.

The ideal would be to perform all five soil preparation types at once, but this will require a large and long combination machine requiring a very large and strong tractor, which will make the solution disproportionately expensive and unprofitable for most average farms.

With soil compacters it is important to achieve a uniformly high pressure on the soil in order to ensure an efficient compacting. Front-mounted soil compacters are known which are often provided with weights for achieving sufficient pressure. This causes heavy steering and loads the steering gear and bearings and so on. Alternatively, a front-mounted soil compacter may be connected with a tractor via a hydraulic cylinder that presses the soil compacter against the ground. This construction causes the front wheel, which are often driving wheels, to be lifted off, whereby steering and traction power are impaired. Thus there is a limit to the weight with which one may load the front-mounted soil compacters.

If speaking of soil working machines in the form of disc harrows or similar soil-loosening apparatuses, it is also important to achieve a high uniform pressure, especially when operating with reduced soil treatment. It is important in order to establish penetration and loosening of the upper five centimetres of the ground surface.

There is also known a type of combination machines combining the above soil preparation type b-e, where the twin wheels of the tractor in combination with a narrow, towed soil compacter driving between the wheel tracks and functioning as first member of the combination machine, and where in connection with the narrow soil compacter there is provided a harrowing, sowing and rolling tool. The soil compacter acts as a front support roller in a towed combination tool which is connected to a tractor via a drawbar. A part of the weight of the combination tool is thus resting on this roller. By limited tool weight, insufficient soil compacting occurs. Furthermore, non-uniform compacting at wheels and at compacting roller may occur. This causes uneven quality of the seedbed.

Furthermore, this kind of combination machines are disadvantageous in that they, due to their length, are difficult to manoeuvre on fields with e.g. many corners and uneven geometries, and that the combination machine is to be disassembled during transport from one location to another.

In order to achieve sufficiently large surface pressure for efficient packing, it is necessary to have a relatively small diameter on the roller of the tool. It may, however, be a problem due to accumulation of soil in front of the roller and thereby insufficient working of the soil. In order to remedy this problem, a greater roller diameter may be chosen, but hereby the surface pressure is reduced and provides insufficient compacting of soil compacters or insufficient penetration force for cutting soil working tools, respectively.

### Object of the Invention

The purpose of the invention is to indicate a soil working tool, either in the shape of a soil compacter or a cutting soil working tool where one avoids the above problems of sufficient and correct surface pressure for preparing the soil. Furthermore, it is desirable to indicate a tool that may be used as a soil compacter which is designed so that combination machines become shorter and easier to manoeuvre.

### Description of the Invention

This is achieved with a soil compacter of the type specified in the introduction, which is peculiar in that the two rollers of the soil working tool is mounted on support holders in the roller frame with a fixed mutual level in any working situation, and that in any working situation, the first roller is provided with its bottom side at a higher level than the bottom side of the second roller.

With the first roller it is thus possible to perform a pre-compacting with the limited surface pressure available. Hereby, a subsequent second roller with lesser diameter may establish a final compacting without any risk of the soil accumulating in front of the roller, as the soil in front of the second roller now has a level which can be controlled by adapting the difference in level between the bottom sides of the two rollers. If instead we are speaking of working with cutting, the first roller will also provide a pre-working and the second roller will perform a final working. As the two rollers are fitted in a frame with fixed mutual levels it is possible to control the surface pressures to be exerted by the two rollers, and thereby to control the depth of the working.

The soil working tool according to the invention is preferably a soil compacter. Alternatively, it may be a disc roller or similar tool for cutting soil treatment.

According to a further embodiment, the tool according to the invention is peculiar in that at least one of the two rollers is individually height adjustable in the roller frame. The two rollers of the tool may hereby be adapted to various types of soil working and to different hardness of the soil to be worked. By individual height adjustment it may be ensured that both rollers participate in soil working, irrespectively whether the earth is very hard, and there will be a tendency that it is only the second and lowest disposed roller which is actively working the soil.

According to a further embodiment, the tool according to the invention is peculiar in that the first roller is provided with its bottom side at a level which not higher than a level corresponding to the centre of the second roller. Hereby is achieved that the second roller will always have the tendency to run over the soil instead of pushing it in front of the roller and risk accumulation.

According to a further embodiment, the tool according to the invention is peculiar in that the two rollers include packing rollers consisting of tubes, rubber tyres, metal rings, plastic rings, or cutting rollers consisting of disc cutters, oblong pipes or a combination thereof. It is possible to make the tool as soil compacter or as cutting tool or a combination by using rollers of different types which are well-known per se in the art.

According to a further embodiment, the tool according to the invention is peculiar in that between the roller frame and the tool frame or the coupling arrangement there is fitted at least one frame actuator so that activation of the at least one frame actuator causes change of the level and/or the angle of the roller frame in relation to the tool frame or the coupling arrangement, and thereby a change in the level of the rollers relative to the earth. Hereby it becomes possible to actuate the contact pressure exerted by the rollers, as one may transfer the weight of an associated tool or a towing machine.

According to a further embodiment, the tool according to the invention is peculiar in that the frame actuators include at least one from the group consisting of hydraulic cylinders, pneumatic cylinders or screw rods in order to change the level of the connected tool. These are commonly used in connection with agricultural tools.

According to a further embodiment, the tool according to the invention is peculiar in that the coupling arrangement is a triple suspension with a longitudinally adjustable actuator mounted on the upper part of the roller frame via a first articulated joint and with lower arms mounted on the lower part of the roller frame via a second articulated joint in order thereby to form a parallelogram link that keeps the roller frame at a largely unchanged angle with the tool disposed approximately in parallel with the earth. Hereby is ensured that the tool can be positioned with a well-defined angle in relation to the ground surface, and thereby it is also ensured that the two rollers are provided correct mutual positions, so that an optimally controlled working of the soil is attained.

According to a further embodiment, the tool according to the invention is peculiar in that the connection of the roller frame to a tool frame or a coupling arrangement for coupling the tool to a towing machine includes an articulated joint with pivoting about a largely vertical axis. The tool will not hereby actuate a tractor, as is a risk by front mounted soil compacters. The tool is provided possibility of pivoting together with a tractor.
According to a further embodiment, the tool according to the invention is peculiar in that it is adapted for coupling by front mounting on a tractor. Alternatively, the tool may be towed.

In the following, the term actuator is used for a unit clamped between machine parts, and where the length may be adjusted either manually or mechanically. Furthermore, the term tractor is used as an example of a towing machine.

With a soil compacter it is intended to achieve a uniform compacting of the soil and a high degree of compacting with the rollers of the soil compacter. The downward-going force on the rollers of the soil compacter will furthermore reduce the significance of the pressure from the wheel set of the tractor with regard to the quality of the soil compacting, as the rollers will compact the soil across their entire width with a pressure being greater than or equal to the pressure from the wheels of the tractor, whereby is achieved a far more uniform soil compacting and a better seedbed.

In order to achieve a transfer of a downwards directed force to the rollers of the soil working tool from the weight of the connected tool and the rearmost part of the tractor, it is necessary that the soil working tool is connected to the tractor in such a way that the connection between tractor and soil compacter allows transmission of force so that the downwards going force on the connection caused by the moment about the point of rotation of the soil working tool from the weight of the connected tool, is counteracted by an upwards going force on the connection caused by the moment about the point of rotation of the soil working tool from the weight of the rearmost part of the tractor. A balance between the mutually opposite forces on the connection between the tractor and soil working tool will appear and thereby cause a downward directed force on the rollers of the soil working tool.

In order to connect a tool on a towed soil compacter, on the upper part of the roller frame there is mounted a fastening arrangement, preferably a triple suspension, which is fitted with a hinge arrangement, preferably a pivoting hinge. Between the fastening arrangement and the upper part of the frame there is mounted a connecting actuator for adjusting the angle of the connected tool with the roller frame holding the fastening arrangement at an angle, and which simultaneously keeps the tool disposed preferably in parallel with the surface of the ground.

Alternatively, the fastening arrangement may be mounted on the connected tool and designed so that the connection between the connected tool and the soil compacter is effected via a hinge and e.g. a top rod.

By using a tool in the form of a towed soil compacter according to the invention, it will be possible and relatively easy for the farmer to change configuration of the combination machine so that the farmer may exchange the connected tool with regard to soil conditions and desired work routines. For example, it may be envisaged that in stiff clay soil it will be an advantage if the soil is worked an extra time with a harrow/roller before sowing. In other combinations it may be envisaged that the soil compacter may e.g. be combined with a sowing machine.

In the design of the invention, the soil compacter will be very stable by driving with a connected tool during soil working and during transport.

### Description of the Drawing

The invention is explained more closely in the following with reference to the drawing, where:
- Fig. 1: shows a side view of a tractor with a front mounted and lift mounted soil working tool according to the present invention;
- Fig. 2: shows a side view of a tractor with a second embodiment of a soil working tool according to the invention;
- Fig. 3: shows a view corresponding to Fig. 2 with the soil working tool in transport position;
- Fig. 4: shows a view of a further embodiment of a soil working tool according to the invention, incorporated in a combination tool;
- Fig. 5: shows the tool depicted in Fig. 4 in transport position;
- Fig. 6: shows a side view of a further embodiment of a soil working tool according to the invention, incorporated in a combination tool; and

- Fig. 7: shows a perspective view of a further embodiment of a soil working tool according to the invention.

### Detailed Description of the Invention

Identical or corresponding elements in all of the Figures will be provided the same designations. No detailed explanation of such elements will thus be given in connection with each Figure.

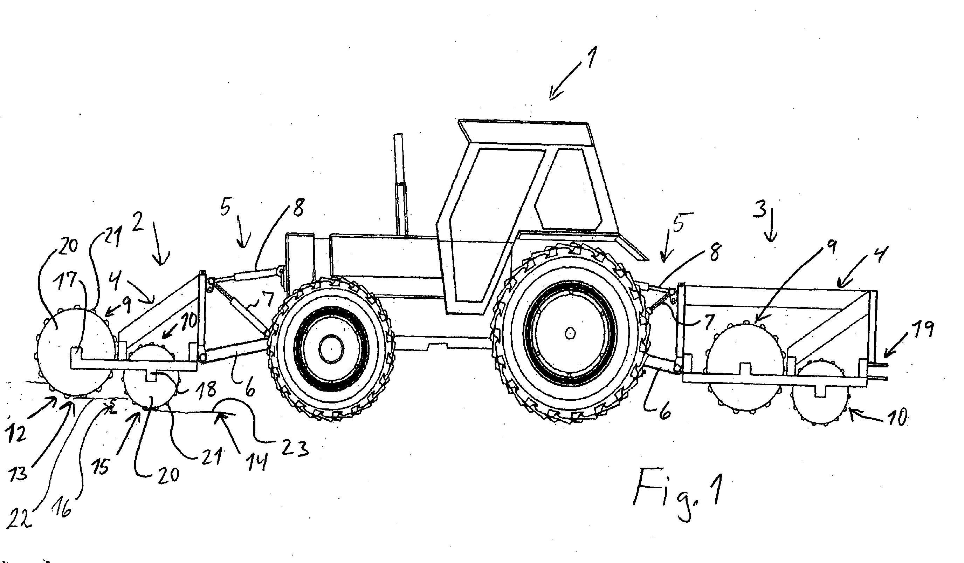

In Fig. 1 appears a tractor 1 with a front mounted soil working tool 2 according to the invention and a lift mounted soil working tool 3 according to the invention.

In practice, a tractor 1 will hardly be provided with two soil working tools as illustrated in Fig. 1. Fig. 1 thus illustrates two possible soil working tools for use together with a tractor 1.

The soil working tool 2 includes a roller frame 4 which is connected with a coupling arrangement 5 consisting of lower lift arms 6 and two actuators 7, 8 for connecting to the tractor 1. The roller frame 4 supports a first roller 9 and a second roller 10.

The first roller 9 will be at the front, as seen in a direction of operation 11 for the tool 2, and has a greater diameter than the other roller 10. Moreover, the first roller 9 will have its bottom side 12 disposed at a level 13 which is higher than a level 14 where the bottom side 15 of the second roller 10 is provided. Thus there will be a vertical spacing 16 between the two levels 13, 14. The rollers 9, 10 are fitted on the frame 4 in support holders 17, 18. Each of the rollers may be mounted in the support holders 17, 18 for vertical adjusting, e.g. by means of actuator spindles or similar. The adjustability may be established in that axle ends are displaced in guideways in the support holders 17, 18. Such adjustability will be possible for all embodiments.

The soil working tool 3 also includes a first and a second roller 9, 10 suspended in a frame 4. The frame 4 is connected with the tractor 1 by a coupling arrangement 5 consisting of lift arms 6 and actuators 7, 8. The frame 4 is provided with draw fork 19 for retrofitting of a towed tool.

In Fig. 1, the two rollers 9, 10 are shown as tube compacting rollers with a side support holder 20 between which a transverse pipe 21 is provided. Alternatively, the rollers 9, 10 may be provided as a disc harrow for providing a loosening of the soil by cutting.

A soil working tool 2, 3 according to the invention will function in that the first roller 9 performs a pre-compacting of uneven soil. Due to the diameter, a limited surface pressure would be provided, and thereby a limited compressing. The surface of the soil 22 after the first roller 9 will be provided at a level with spacing 16 above a lower point 15 on the succeeding roller 10. This spacing may be adjusted, depending on the wanted compression. The roller 10 will perform a final compacting so that a ground surface 23 with well-defined compaction appears subsequently, which may be provided with a large surface pressure which is effected since the roller 10 has lesser diameter than the roller 9. The ground surface 23 may thus be prepared for a seedbed where a soil working may be performed subsequently for loosening at the correct depth. The loosening may e.g. be effected with a tool which is mounted after the tractor. Instead of the embodiment of the tool 3 shown in Fig. 1, there may thus be provided a tool where the rollers are formed as discs providing a well-defined loosening of the ground surface for establishing a correct seedbed.

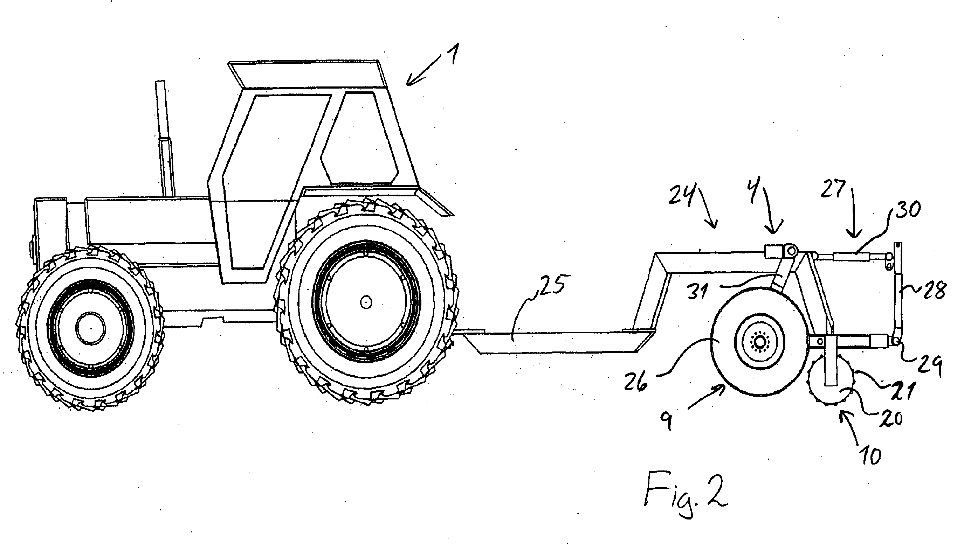

Fig. 2 shows a further embodiment of a soil working tool 24 which is a towed tool. The tool 24 thus has a drawbar 25 with which it is connected to the tractor 1. The roller frame 4 supports the two rollers 9, 10. The roller 10 corresponds to the one shown in Fig. 1, and the roller 9 differs by being a rubber wheel 26 in a compact roller. The tool 24 is provided with connecting arrangement 27 for coupling of a following tool. The coupling arrangement 27 includes a mounting frame 28 with an articulated joint 29 to the roller frame 4 and an actuator 30 at an upper side of the frame 28.

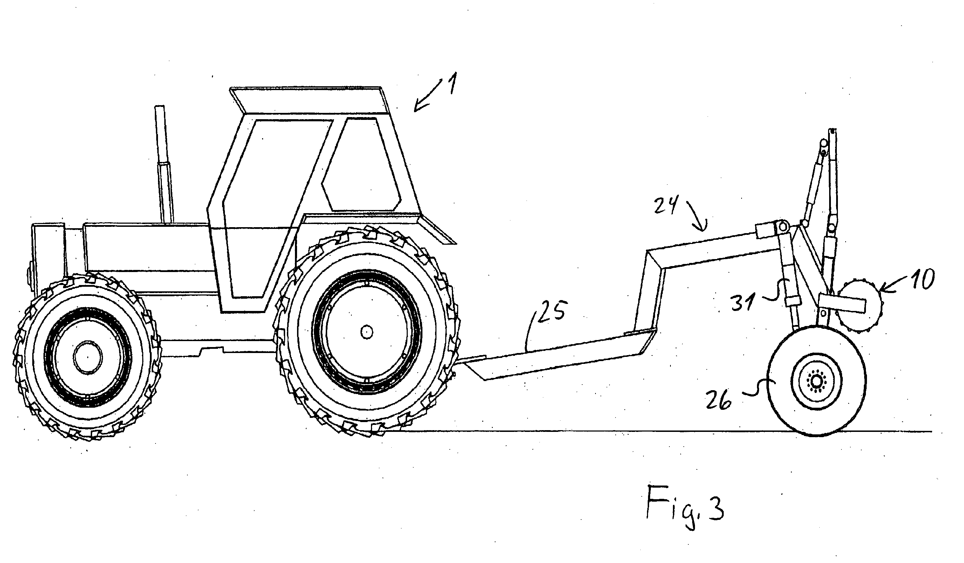

Fig. 3 shows the embodiment of Fig. 2 with the tool 24 elevated to a transport position. This is effected in that an actuator 31 is extended so that the rubber wheel 26 is pivoted downwards and may be used as a wheel for transport.

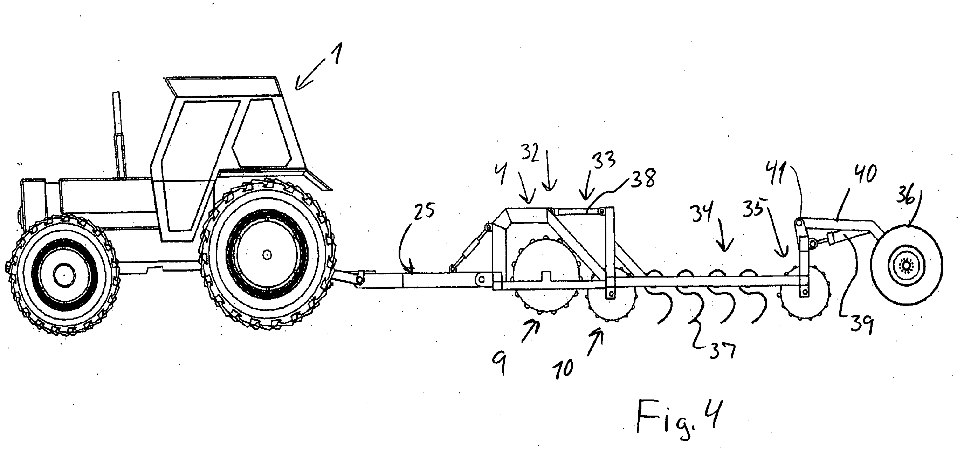

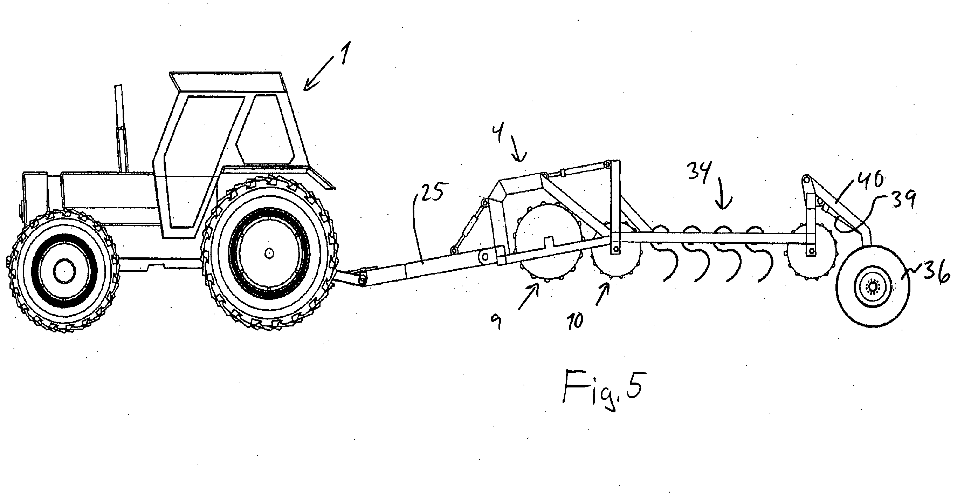

Fig. 4 shows a soil working tool 32 according to a further embodiment of the invention. The roller frame 4 supports two rollers 9, 10 corresponding to those mentioned in Fig. 1. The roller frame 4 is connected with the tractor 1 via a drawbar 25. Via a connection arrangement 33, the roller frame 4 is coupled to a harrow section 34 which includes a rear compacting roller 36 and a transport wheel 36. The two rollers 9, 10 thus form part of a combination tool where they perform compacting of the soil which is subsequently worked by the harrow teeth 37 of the harrow section 34 for establishing a seedbed. The coupling arrangement 33 between the harrow section 34 and the roller frame 4 includes an actuator 38 which enables mutual angling. The tool furthermore includes an actuator 39 for pivoting the transport wheel 36 between an operating position as shown, and a transport position as shown in Fig. 5. The transport wheel 36 is suspended in an arm 40 which is pivotable about a pivotal point 41 on the harrow section 34.

As mentioned above, Fig. 5 shows the tool shown in Fig. 4 in transport position, as the transport wheel 36 is pivoted to transport position so that the tool is elevated. By activating the actuator 39, there is performed a simultaneous activation of the actuator 38 so that the harrow section 34 is kept largely in parallel with the ground surface, thereby providing good ground clearance.

It appears that the above combination tool will be very compact, as the soil working tool according to the invention in the shape of a soil compacter is provided as an integrated part of the combination tool.

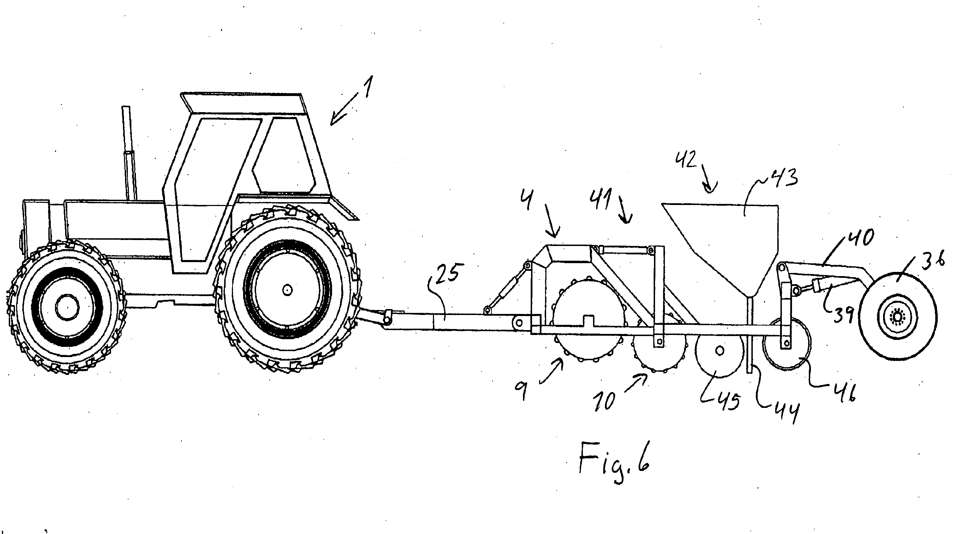

Fig. 6 illustrates the soil working tool 32 integrated in another combination tool 41. The combination tool 41 includes a sowing section 42 with a hopper 43 and seed tube 44. Disc-shaped cutting edges 45 are provided between the two rollers 9, 10 for loosening the soil for establishing a seedbed immediately in front of the seedtubes 44. Furthermore, the combination tool 41 includes a roller 46.

The combination tool shown in Fig. 6 will include a sowing section 42 which in principle may be substituted with the harrow section 34, or reversely. In both situations, these sections are coupled to the foremost section, including the soil working tool 32 with the two rollers 9, 10.

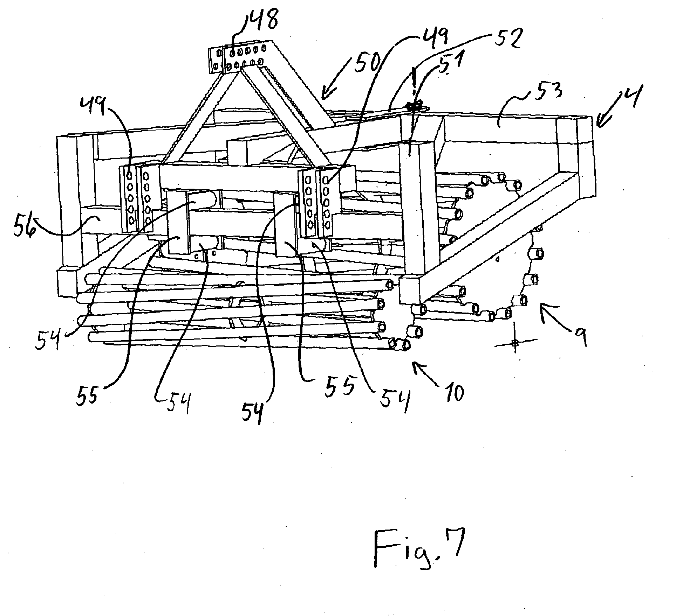

Fig. 7 is a perspective view of a soil working tool 47 in the form of a soil compacter for front mounting. The rollers 9, 10 are fitted in the roller frame 4 by means of not shown support holders. The roller frame 4 has an upper support holder 48 for fastening to an upper top rod and lower support holders 49 for mounting in lift arms.

In order to avoid that the soil compacter actuates a tractor due to the contact pressure on the soil, the roller frame 4 is two-part. The mounting support holders 48, 49 will thus be mounted in a frame section 50 which is connected with the upper roller frame 4 via a vertical journal 51 passing through eyelets on a forked support holder 52 and through an opening in a horizontal beam 53 in the roller frame 4. The frame section 50 is furthermore provided with four largely horizontally oriented support rollers 54 which are rotatably mounted in support holders 55. Between each of the two pairs of rollers 54, a horizontal beam 56 is provided in the roller frame 4. By contact pressure, an upper support roller will press upon the beam 56 and press the soil compacter down against the soil. When lifting off, the lower rollers will press against the bottom side of the beam 56 and lift the soil compacter off the ground.

In use, the soil compacter may pivot about the journal 51, as the beam 56 may be moved a certain distance from side to side between the rollers 54.

The invention is not limited to the embodiment shown on the drawing and described above. Other embodiments with other types of rollers, fastening arrangements and actuators are possible within the scope of the subsequent claims. Thus it would be possible to replace the shown rollers with other types of rollers consisting of tubes, rubber tyres, metal ring or plastic rings. It will also be possible to provide cutting rollers consisting of disc cutters, oblong pipes or combinations thereof. It will also be possible to provide a first and a second roller in a roller frame 4 with combinations of such rollers.

## Claims

1. A soil working tool (2) with at least two rollers (9, 10) with different diameters in that a first roller (9) has greater diameter than a second roller (10) as seen in the direction of movement of the tool, the rollers (9, 10) being suited for working soil and having a roller frame (4) for connecting the at least two rollers (9, 10) to a tool frame or a coupling arrangement (5) for coupling the tool (2) to a towing machine (1), **characterised in that** the two rollers (9, 10) of the soil working tool (2) is mounted on support holders (17, 18) in the roller frame (4) with a fixed mutual level in any working situation, and that in any working situation, the first roller (9) is provided with its bottom side at a higher level than the bottom side of the second roller (10).

2. Soil working tool according to claim 1, **characterised in that** it is a soil compacter.

3. Soil working tool according to claim 1 or 2, **characterised in that** at least one of the two rollers (9, 10) is individually height adjustable in the roller frame (4).

4. Soil working tool according to claim 1, 2 or 3, **characterised in that** the first roller (9) is provided with its bottom side at a level which not higher than a level corresponding to the centre of the second roller (10).

5. Soil working tool according to any preceding claim, **characterised in that** the two rollers (9, 10) include packing rollers consisting of tubes, rubber tyres, metal rings, plastic rings, or cutting rollers consisting of disc cutters, oblong pipes or a combination thereof.

6. Soil working tool according to any preceding claim, **characterised in that** between the roller frame (4) and the tool frame or the coupling arrangement (5) there is fitted at least one frame actuator (7, 8) so that activation of the at least one frame actuator (7, 8) causes change of the level and/or the angle of the roller frame (4) in relation to the tool frame or the coupling arrangement (5), and thereby a change in the level of the rollers (9, 10) relative to the earth.

7. Soil working tool according to claim 6, **characterised in that** the frame actuators (7, 8) include at least one from the group consisting of hydraulic cylinders, pneumatic cylinders or screw rods.

8. Soil working tool according to any preceding claim, **characterised in that** the coupling arrangement (5) is a triple suspension with a longitudinally adjustable actuator (8) mounted on the upper part of the roller frame (4) via a first articulated joint and with lower arms mounted on the lower part of the roller frame (4) via a second articulated joint in order thereby to form a parallelogram link that keeps the roller frame (4) at a largely unchanged angle with the tool disposed approximately in parallel with the earth.

9. Soil working tool according to any preceding claim, **characterised in that** the connection of the roller frame (4) to a tool frame or a coupling arrangement (5) for coupling the tool (2) to a towing machine (1) includes an articulated joint with pivoting about a largely vertical axis.

10. Soil working tool according to any preceding claim, **characterised in that** it is adapted for coupling by front mounting on a tractor (1).

## Patentansprüche

1. Bodenbearbeitungsgerät (2) mit mindestens zwei Walzen (9, 10) unterschiedlichen Durchmessers, wobei eine erste Walze (9) in der Bewegungssrichtung des Geräts gesehen einen grösseren Durchmesser als die zweite Walze (10) aufweist, welche Walzen (9, 10) für Bodenbearbeitung geeignet sind und einen Walzenrahmen (4) zur Verbindung von den mindestens zwei Walzen (9, 1) mit einem Geräterahmen oder einer Kuppelvorrichtung (5) zur Kupplung des Geräts (2) zu einer Zugmaschine (1) aufweisen, **dadurch gekennzeichnet, dass** die zwei Walzen (9, 10) des Bodenbearbeitungsgeräts (2) in Trägervorrichtungen (17, 18) im Walzenrahmen (4) in einer in irgendeiner Bearbeitungsstellung festen, gegenseitigen Höhe angeordnet sind, und dass die Unterseite der ersten Walze (9) in irgendeiner Arbeitslage in einer höheren Ebene als die Unterseite der zweiten Walze (10) gelegen ist.

2. Bodenbearbeitungsgerät nach Anspruch 1, **dadurch gekennzeichnet, dass** es ein Bodenverdichter ist.

3. Bodenbearbeitungsgerät nach Anspruch 1 oder 2, **dadurch gekennzeichnet, dass** mindestens eine von den zwei Walzen (9, 10) unabhängig höhenverstellbar im Walzenrahmen (4) angeordnet ist.

4. Bodenbearbeitungsgerät nach Anspruch 1, 2 oder 3, **dadurch gekennzeichnet, dass** die Unterseite der ersten Walze (9) sich in einer Ebene befindet, die höchstens in einer der Mitte der zweiten Walze (10) entsprechenden Höhe gelegen ist.

5. Bodenbearbeitungsgerät nach irgendeinem der vorhergehenden Ansprüchen, **dadurch gekennzeichnet, dass** die zwei Walzen (9, 10) Verdichtungswalzen umfassen, die aus Rohren, Gummireifen, Metallringen, Kunststoffringen oder Schneidewalzen, bestehend aus Tellerschneidern, länglichen Rohren oder einer Kombination davon, bestehen.

6. Bodenbearbeitungsgerät nach irgendeinem der vorhergehenden Ansprüchen, **dadurch gekennzeichnet, dass** mindestens eine Rahmenbetätigungsvorrichtung ( 7, 8) zwischen dem Walzenrahmen (4) und dem Geräterahmen oder dem Kupplungsmechanismus (5) angeordnet ist, so dass die Betätigung von der mindestens einen Rahmenbetätigungsvorrichtung (7, 8) eine Änderung der Höhenposition und/oder des Winkels des Walzenrahmens (4) bezüglich des Geräterahmens oder des Kupplungsmechanismusses (5) und somit eine Änderung der Höhenposition der Walzen (9, 10) bezüglich des Bodens herbeiführt.

7. Bodenbearbeitungsgerät nach Anspruch 6, **dadurch gekennzeichnet, dass** die Rahmenbetätigungsvorrichtungen (7, 8) mindestens einen aus der Gruppe bestehend aus hydraulischen Zylindern, pneumatischen Zylindern oder Schraubenspindeln umfassen.

8. Bodenbearbeitungsgerät nach irgendeinem der vorhergehenden Ansprüchen, **dadurch gekennzeichnet, dass** der Kupplungsmechanismus (5) ein Dreipunkt-anbau mit einer längsverstellbaren, auf dem oberen Teil des Walzenrahmens (4) durch eine zweite Gelenkverbindung befestigten Betätigungsvorrichtung (8) zur Bildung einer Parallelogrammverbindung ist, die den Walzenrahmen (4) in einem im wesentlichen unveränderten Winkel zu dem annähernd bodenparallel befindlichen Gerät befestigt.

9. Bodenbearbeitungsgerät nach einem der vorhergehenden Ansprüchen, **dadurch gekennzeichnet, dass** die Verbindung zwischen dem Walzenrahmen (4) und dem Geräterahmen oder dem Kupplungsmechanismus (5) zur Kupplung des Geräts (2) zu einer Zugmaschine (1) eine um eine im wesentlichen senkrechte Achse schwenkbare Gelenkverbindung umfasst.

10. Bodenbearbeitungsgerät nach irgendeinem der vorhergehenden Ansprüchen, **dadurch gekennzeichnet, dass** es zur Frontkupplung auf einem Zugfahrzeug (1) vorgesehen ist.

## Revendications

1. Outil de travail de la terre (2) comportant au moins deux rouleaux (9, 10) de diamètres différents, un premier rouleau (9) de plus grand diamètre qu'un deuxième rouleau (10), vu dans le sens d'avance de l'outil, les rouleaux (9, 10) étant adaptés à travailler la terre et ayant un bâti de rouleau (4) pour connecter au moins les deux rouleaux (9, 10) avec un bâti d'outil ou un arrangement d'accouplement (5) pour accoupler l'outil (2) à une machine tracteur (1), **caractérisé en ce que** les deux rouleaux (9, 10) de l'outil de travail de la terre (2) sont montés sur des supports (17, 18) dans le bâti de rouleau (4) à une hauteur fixe mutuelle dans toute situation de travail, et que, dans toute situation de travail, le premier rouleau (9) est réalisé avec sa face inférieure à un niveau plus élévé que la face inférieure du deuxième rouleau (10).

2. Outil de travail de la terre selon la revendication 1, **caractérisé en ce qu'**il est un compacteur de sol.

3. Outil de travail de la terre selon la revendication 1 ou 2, **caractérisé en ce qu'**au moins un des deux rouleaux (9, 10) est individuellement réglable en hauteur dans le bâti de rouleau (4).

4. Outil de travail de la terre selon la revendication 1, 2 ou 3, **caractérisé en ce que** le premier rouleau (9) est réalisé avec sa face inférieure à un niveau qui n'est pas plus élévé qu'un niveau correspondant au centre du deuxième rouleau (10).

5. Outil de travail de la terre selon l'une quelconque des revendications précédentes, **caractérisé en ce que** les deux rouleaux (9, 10) comprennent des rouleaux compacteurs comprenant des tubes, des roues en caoutchouc, des anneaux métalliques, des anneaux plastiques ou des rouleaux de coupe comprenant des disques de coupe, des tubes oblongs ou une combinaison de cela.

6. Outil de travail de la terre selon l'une quelconque des revendications précédentes, **caractérisé en ce qu'** au moins un vérin de bâti (7, 8) est aménagé entre le bâti de rouleau (4) et le bâti d'outil ou l'arrangement d'accouplement (5) de manière à ce que l'activation d'au moins l'un des vérins de bâti (7, 8) mène à un changement du niveau et/ou de l'angle du bâti de rouleau (4) par rapport au bâti d'outil ou l'arrangement d'accoupplement (5), et ainsi un changement du niveau des rouleaux (9, 10) par rapport au sol.

7. Outil de travail de la terre selon la revendication 6, **caractérisé en ce que** les vérins de bâti (7, 8) comprennent au moins l'un du groupe comprenant des vérins hydrauliques, des vérins pneumatiques ou des tiges de vis.

8. Outil de travail de la terre selon l'une quelconque des revendications précédentes, **caractérisé en ce que** l'arrangement d'accouplement (5) constitue une suspension à trois points avec un vérin (8) réglable longitudinalement monté sur la partie supérieure du bâti de rouleau (4) au moyen d'une première articulation et avec des bras inférieurs montés sur la partie inférieure du bâti de rouleau (4) au moyens d'une deuxième articulation pour ainsi former une liaison de type parallélogramme qui garde le bâti de rouleau (4) à une angle essentiellement sans modification avec l'outil disposé approximativement en parallèle avec le sol.

9. Outil de travail de la terre selon l'une quelconque des revendications précédentes, **caractérisé en ce que** la connection du bâti de rouleau (4) à un bâti d'outil ou un arrangement d'accouplement (5) pour accoupler l'outil (2) à une machine tracteur (1) comprend une articulation pivotante autour d'un axe essentiellement vertical.

10. Outil de travail de la terre selon l'une quelconque des revendications précédentes, **caractérisé en ce qu'**il est adapté pour être accouplé à la partie avant d'un tracteur (1).
